# EUROPEAN PATENT APPLICATION

(11) **EP 1 265 442 A1**
(43) Date of publication of application: **11.12.2002**
(21) Application number: 02380110.3
(22) Date of filing: 27.05.2002
(51) Int. Cl.: H04N 7/18

(54) **Video and sound signal transmission system applicable to railways**

(30) Priority: 08.06.2001 ES 200101337
(71) Applicant: TV Transit, S.A., 28223 Pozuelo de Alarcon, Madrid (ES)
(72) Inventor: Fuster Rufilanchas, Jaime, 28223 Pozuelo de Alarcòn Madrid (ES); Trapero, Gimenez, Fernando, 28223 Pozuelo de Alarcòn Madrid (ES)
(74) Representative: Toro Gordillo, Ignacio Maria

(57) **Abstract**

A video and sound signal transmission system applicable to railway wagons (1) provided with some terminals formed by television screens and sound, consisting of a transmitter head subsystem of the signal to be presented, a transmission subsystem responsible for transmitting the signal to the wagons and a head subsystem receiving the signal encoded in MPEG 2 format and inserted in a Gigabit Ethernet telecommunication network available in the metropolitan railway network, while the transmission subsystem consists of a transmitter device (4) located in each station, formed by three antennas: two unidirectional ones (2) inserted at each end of the tunnel (5) and another omnidirectional one (3) to provide coverage to the station, connected to the GigaEthernet network and the onboard train subsystem consisting of a receiver and control centre, power supply and TFT screens.

## Description

The present invention refers to a video signal transmission system applicable to railways, consisting of a novel and original video signal transmission system in real time to moving vehicles, both along tracks or aerial or surface lines, as well as underground.

For this reason, the proposed invention will be of special interest for the manufacturing and equipment and installations supply sector in telecommunications, in devices mainly used in the railway industry.

With respect to this type of telecommunication systems with mobile components as in the case of railway convoys, the state-of-the-art is defined by a wide range of devices. The most primitive ones lack external communication means, so that the video signals transmitted in the convoy wagons are only those reproduced inside them by means of a video reproducer or similar equipment. Said signals are conveyed by means of suitable circuitry (generally wiring) through the corresponding wagons to the different terminals provided with the corresponding screens.

The development and cheapening of communication means by means of video signals, and particularly the possibility of their transmission by compressing the signals in high capacity formats such as MPEG (Motion Picture Experts Group) and transmitting said compressed information by telecommunication networks, such as Gigabit Ethernet, has provoked a great interest within the industry due to the possibilities that these systems open to advertisement diffusion or rebroadcasting of events (news, sports events, etc.), in turn significantly increasing the quality received by the user, making railway travel more pleasant.

For all these reasons, different telecommunication systems have been designed and developed to link with moving vehicles. Normally, the principle employed is based on some radio-frequency transmitters and repeaters distributed along the track along which the convoys circulate. In this way, the need of laying cables from the leading video transmitter to the terminals distributed throughout the convoy inside wagons is also eliminated, due to the fact that they may be directly provided with a radio-frequency receiver receiving the transmitted signal and channelling it to the terminals or television screens, or for example grouped in wagons.

The main obstacle to overcome with these systems is the elimination of shadow zones, especially when the layout runs along underground tracks, as in the case of the metropolitan underground railways, where the difficulty of making the radio-frequency signal reach the receivers located on the convoy wagons is maximum.

A solution known in the state-of-the-art is that described in patent FR-A-2259490 (SIEMENS) regarding a device to transmit signals between a vehicle and a fixed apparatus having a coaxial cable provided with an external split conductor, arranged along the vehicle displacement track and including a metallic body, a conductor in the dispersion field along which an antenna joined to the vehicle is displaced. Patent document DE-A-195 41 650 (SIEMENS) describes an antenna in the form of a signal transmission cable, improved with respect to the first background mentioned, likewise indicating in its specification the publication "French Railway Review" (Vol. 2, No. 6, 1984) pages 395 to 400, the disclosure of a video camera system assembled on a platform and intended to transmit a signal with the information of said video cameras to a monitor installed inside a railway, through a radio-frequency connection or link. An advertising system applied to suburban trains described in patent ES-A-2147126 (Más Marimón) is also known, using said radial transmitter cable laid along the suburban railway convoy tracks, next to which pass several receiving antennas installed on said railway, using an audio-visual reproducer as a transmitter and having its own omnidirectional antenna for each display unit or screen.

The described solutions have the drawback of having to deploy said radial transmitter cable along the railway track, with not only the economic drawbacks this may have but those of assembly and maintenance. However, the present invention constitutes an original solution, avoiding the mentioned laying of the transmission cable, and in turn, on many occasions, allowing the harnessing of other already existing installations in metropolitan railway stations. It is therefore an improvement compared with that known in the described state-of-the-art, from which important benefits are derived by technically improving the system as well as considerably reducing the installation cost thereof.

The present invention consists of a video signal transmission system and generally with real time video-images and sound and specially applicable to railways and more particularly to suburban railways.

The system is based on the transmission of said contents (video images and sound) in a high compression format to be detailed below, through a wireless network of Wireless Ethernet access points with 50 Mbits/s capacity, deployed along suburban railway tunnels.

The proposed system is a video signal transmission system for railway convoy wagons; for example, the metropolitan underground railway, provided with terminals in the form of television screens and sound, consisting of a transmitter head subsystem of the signal to be presented, a transmission subsystem responsible for transmitting the signal to the wagons and an onboard equipment subsystem inside the convoy wagons. In the proposed system, said three subsystems are co-ordinated with each other. Said head subsystem consists of a video signal receiving device receiving signals from a remote production or diffusion centre. Said video signal is encoded in MPEG 2 format and inserted in a local Ethernet network, preferably a GigabitEthernet network, available in the metropolitan railway network, useful to transmit information to the platforms while the transmission subsystem consists of a transmitter device located in each station and connected to another router port of each station of the GigabitEthernet network that may pre-exist, and the onboard train subsystem consisting of a receiving and control centre, power supply and TFTs or terminal screens.

Likewise, said transmission subsystem covers the entire tunnel topology since said transmitter device is situated in each station, formed by three antennas: two unidirectional ones inserted at each end of the tunnel and an omnidirectional one to provide coverage to the station, being possible to install more antennas at some intermediate tunnel points, according to tunnel distance and topology.

Moreover, in said onboard train subsystem, said control centre has a Wireless Ethernet card receiving the contents transmitted by the leading antennas covering the railway network, having a specific computer programme which decodes the MPEG 2 format compressed signal, converting it into a suitable means to be displayed by TFTs or terminal screens. This subsystem has a monitoring and control system, always permitting to know the operational status of the entire assembly.

Below, a detailed description will be made of the video signal transmission system on railways, object of the present invention, referring to the attached drawings showing as a non-limiting example, a preferred embodiment of all those detail variations which do not involve a fundamental change of the essential features of said improvements.

Said drawings show:

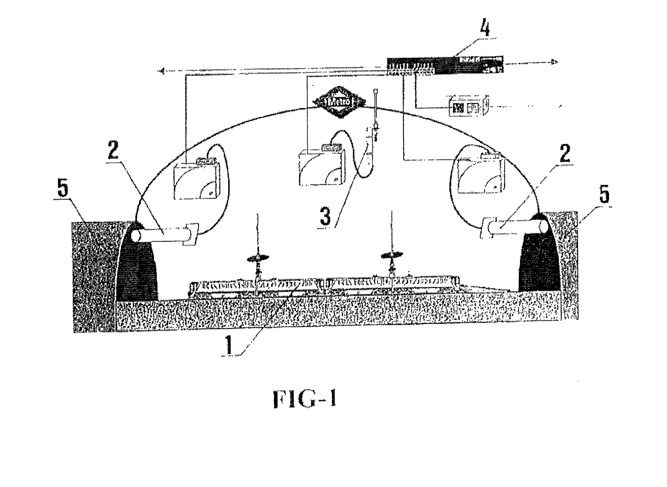

In Figure 1: a schematic view of the video signal transmission system on railways, installed in an underground railway station, such as a metropolitan railway.

According to the embodiment example shown, the video signal transmission system on railways shown in this preferred embodiment basically consists of a video and sound signal transmission system for underground metropolitan railway convoy wagons (1), provided with terminals in the form of television screens and sound, consisting of a transmitter head subsystem of the signal to be presented, a transmission subsystem responsible for signal transmission to the wagons and an onboard equipment subsystem inside the convoy wagons. In this system, said three subsystems are co-ordinated with each other, said head subsystem consisting of a video signal receiver device receiving signals from a remote production or diffusion centre. This video signal is encoded in MPEG 2 format and inserted in the GigabitEthernet telecommunications network that may already be available in the metropolitan railway network (for signal transmission to stations), whilst the transmission subsystem consists of a transmitter device (4) located in each station, connected to another router port of each normally pre-existing Gigabit network station. The onboard train subsystem consists of a receiver and control centre, power source and TFTs or terminal screens.

Likewise, said transmission subsystem (4) covers the entire tunnel topology, since said transmitter device is located in each station, formed by three antennas: two unidirectional ones (2) inserted at each end of the tunnel (5) and an omnidirectional one (3) to provide coverage to the station, being possible to install more antennas at some intermediate tunnel points, according to tunnel distance and topology.

Moreover, in said onboard train subsystem, said control centre has a Wireless Ethernet card, receiving the contents transmitted by the leading antennas covering the metropolitan railway network, having a specific computer programme which decodes the MPEG 2 format compressed signal, converting it to a means suitable to be displayed by the TFTs or terminals, the assembly having a monitoring and control system, always allowing to know the system's operational status.

Having sufficiently described the components of the invention and its functional interrelation to be understood and implemented by an expert in the matter, this invention will be extended to the essential aspects indicated in the following claims.

## Claims

1. A video and sound signal transmission system applicable to railways, consisting of a video signal transmission system for underground metropolitan railway convoy wagons (1), provided with terminals in the form of television screens and sound, whose system consists of a transmission subsystem responsible for transmitting the signal to the wagons and an onboard equipment subsystem, inside the convoy wagons, **characterised in that** said three subsystems are co-ordinated with each other, said head subsystem consisting of a video signal receiver device, with the signal encoded in MPEG 2 format and inserted in a local Wireless Ethernet telecommunication network, deployed along the tunnels of a railway network, while the transmission subsystem consists of a transmitter device (4) located in each station, connected to another router port of each station of said Wireless Ethernet network and the onboard train subsystem consisting of a control and reception centre, power source and some TFTs or terminal screens.

2. A system according to claim 1, **characterised in that** said local Wireless Ethernet telecommunication network is a GigaEthernet network.

3. A system according to the first claim, **characterised in that** said transmission subsystem (4) covers the entire tunnel topology, comprising at least one transmitter device located in each station, formed by three antennas: two unidirectional ones (2) inserted at each end of the tunnel and another omnidirectional one (3) to provide coverage to the station, being possible to have more antennas at some intermediate tunnel point, according to tunnel distance and topology.

4. A system according to any of the previous claims, **characterised in that** in said onboard train subsystem, said control receiver centre has a Wireless Ethernet card, foreseen to receive the contents transmitted by the leading antennas covering the railway network, having an applied, specific computer programme which decodes the MPEG 2 format compressed signal, converting it to a means suitable to be displayed by the TFTs or terminal screens.

5. A system according to claim 4, **characterised in that** the onboard subsystem assembly has monitoring and control equipment, always allowing to know the operational status of the whole system.
